# EUROPÄISCHE PATENTSCHRIFT

(11) **EP 1 044 245 B1**
(45) Veröffentlichungstag und Bekanntmachung des Hinweises auf die Patenterteilung: **28.01.2004**
(21) Anmeldenummer: 98963458.9
(22) Anmeldetag: 16.11.1998
(51) Int. Cl.: C09J 4/06, C08K 5/00

(54) **FUNKTIONELLE FARBSTOFFE ALS INDIKATOR IN AEROB HÄRTENDEN ZUSAMMENSETZUNGEN**
FUNCTIONAL DYES USED AS AN INDICATOR IN AEROBICALLY HARDENING COMPOSITIONS
COLORANTS FONCTIONNELS SERVANT D'INDICATEUR DANS DES COMPOSITIONS DURCISSANT EN MILIEU AEROBIE

(30) Priorität: 24.11.1997 DE 19751953
(43) Veröffentlichungstag der Anmeldung: 18.10.2000
(73) Patentinhaber: Henkel Kommanditgesellschaft auf Aktien, 40589 Düsseldorf-Holthausen (DE)
(72) Erfinder: FRIESE, Carsten, D-22559 Hamburg (DE); KNÜBEL, Georg, D-40229 Düsseldorf (DE)
(86) Internationale Anmeldenummer: PCT/EP1998/007303
(87) Internationale Veröffentlichungsnummer: WO 1999/027027

(56) Entgegenhaltungen:
- WO-A-98/34980
- DE-A- 4 441 414
- US-A- 3 390 121
- US-A- 4 164 492
- US-A- 5 567 753
- PATENT ABSTRACTS OF JAPAN vol. 003, no. 023 (C-038), 26. Februar 1979 & JP 53 147731 A (DAINICHI SEIKA KOGYO KK), 22. Dezember 1978

## Beschreibung

Die vorliegende Erfindung betrifft eine aerob härtende Reaktivklebstoffzusammensetzung, ihre Herstellung und Verwendung.

Klebeverbindungen sind in der Haushaltsgeräte-, Elektro-, Elektronik-, Möbel-, Sportartikel-, Bau- (Innen- und Außenbereich), Keramikindustrie und im Kraftfahrzeugbau inklusive deren Zulieferbetrieben anzutreffen. Die Maschinenbaubranche profitiert von den klebtechnischen Eigenschaften genauso wie die Armaturen- oder Installationstechnik, wo zusätzlich Dichtungsaufgaben übernommen werden müssen. Neben den gleichartigen Materialkombinationen von Stahl. Aluminium. Messing, Kupfer, lackierten Metalloberflächen. Holz. Glas. PVC. PC (Polycarbonat). und ABS sind insbesondere unterschiedliche Materialpaarungen klebtechnisch von Bedeutung. Bei diesen Verbundverklebungen wird oft durch unterschiedliches Wärmeausdehnungsverhalten oder Adhäsionsverlust, auch an Materialien wie Ferrit oder Keramik, die Leistungsgrenze bekannter Klebstoffsysteme erreicht. In einigen Anwendungen müssen die Klebstoffe zusätzlich Dämpfungseigenschaften besitzen bzw. dürfen bei unterschiedlichen elektrochemischen Potentialen keine korrosionsfördernde Eigenschaft aufweisen.

Von den bekannten Klebstoffsystemen wie 2K-Epoxidharzen, Cyanacrylaten, Dispersions-, Kontakt-, 2K-Acrylat-, 2K-Polyurethan- oder anaerob-härtenden Klebstoffen sind anwendungstechnische Grenzen hinsichtlich Spaltfüllvermögen, Elastizität, automatischer Dosierung, Wärmebeständigkeit, Flüchtigkeits- und Alterungsverhalten bekannt.

Ferner werden für Verklebungen unterschiedlichster Materialien bei der industriellen automatischen Fertigung überwiegend kurze Taktzeiten verlangt. Aerob härtbare Klebstoffe, wie sie z.B. aus der DE-A-4000776 oder der DE-A-4123194 bekannt sind. erfüllen viele der vorgenannten Voraussetzungen. Aerob härtbare Klebstoffzusammensetzungen sind bekanntlich radikalisch polymerisierbare Mehrstoffgemische, die unter Luftausschluß, insbesondere Sauerstoffausschluß, lagerstabil sind. Weiterhin dürfen diese Zusammensetzungen keine Peroxide enthalten. Hierzu werden diese Zusammensetzungen bekanntlich sorgfältig entgast und/oder mit einem Desoxigenator versetzt. Dadurch ist eine gezielte Polymerisationsauslösung möglich: So sind z.B. Klebstoffe und Dichtungs-, Beschichtungs- und Form-Massen zunächst lagerstabil über einen für die Praxis ausreichenden Zeitraum von mehreren Monaten und härten dann auf einfache Weise bei Zutritt von Luft bereits bei Raumtemperatur innerhalb kurzer Zeit aus. Zur Aktivierung des aeroben Klebstoffes sind vor bzw. nach dem Fügen Wartezeiten nötig, während derer der Sauerstoff der Luft Zutritt zu der Klebstoffzusammensetzung haben muß. Für die industrielle automatische Fertigung mit ihren kurzen Taktzeiten schlägt die DE-A-4441414 Vorrichtungen und Maßnahmen zur Dosierung und Lagerung von aeroben Klebstoffen vor. Gemäß der Lehre der Schrift kann auch die Zeit zwischen der Klebstoffapplikation und dem Fügen der zu verbindenden Teile dadurch verringert werden, daß der Sauerstoff dem Klebstoff schon vor dessen Applikation zugegeben wird. Dazu enthält das Applikationsgerät eine Mischkammer, in der der Sauerstoff ― sei es in reiner Form oder als Luft ― mit mehr oder weniger Druck dem Klebstoff zugefügt wird.

Einkomponentige aerob härtende Reaktivklebstoffe benötigen für die Aktivierung eine bestimmte Zeit um Luftsauerstoff aufzunehmen (Luftkontaktzeit). Die benötigte Luftkontaktzeit ist abhängig von den in der Klebstoff-Zusammensetzung verwendeten Additiven, Stabilisatoren, Temperatur und anderen Parametern, so daß die jeweils optimale Luftkontaktzeit für den Anwender erst durch Versuche ermittelt werden müßte. Für eine problemlose und fehlerarme Anwendung derartiger Klebstoffe besteht also ein Bedarf, die ausreichende Sauerstoffaufnahme der aerob härtbaren Zusammensetzung einfach feststellen zu können.

Die erfindungsgemäße Lösung dieser Aufgabe ist den Patentansprüchen zu entnehmen. Sie besteht im wesentlichen in der Bereitstellung von aerob härtbaren Zusammensetzungen auf der Basis von radikalisch polymerisierbaren Verbindungen, die ein Aktivatorsystem zur Ausbildung von Peroxiden und einen Farbstoff als Indikator für die ausreichende Sauerstoff-Aufnahme enthalten. Weiterhin können die erfindungsgemäßen aerob härtenden Zusammensetzungen weitere übliche Zusatzstoffe enthalten.

Der Zusatz von Farbstoffen zu Klebstoffzusammensetzungen zum Zwecke der Verfolgung des Aushärtungsgrades ist bereits bekannt. So beschreibt die EP-A-342965 eine Klebstoffzusammensetzung aus einem einkomponentigen hitzehärtenden Klebstoff und einem wirksamen Anteil eines wasserunlöslichen Indikators, der mit den Komponenten des Klebstoffes bei Raumtemperatur nicht reagiert, der jedoch bei Hitzehärtung einen Farbwechsel produziert, um eine sichtbare Bestimmung des Härtungszustandes des Klebstoffes zu bewirken.

Die EP-A-79703 beschreibt eine zweikomponentige Klebstoffzusammensetzung, deren eine Komponente ein Vinylmonomer und einen Polymerisationsinitiator enthält und die zweite Komponente einen Polymerisationsbeschleuniger enthält und zusätzlich einen Redoxindikator mit einem E_{O} von größer + 0.01 bis niedriger als + 0,76 Volt und einem R_{H} von 13,5 bis 28. Gemäß der Lehre dieser Schrift dient der Farbstoff zur Anzeige des Zeitpunktes, von dem an die Mischung der zweikomponentigen Klebstoffzusammensetzung nach dem Mischen nicht mehr benutzt werden soll (Topfzeitende). Weiterhin dient dieser Farbstoff dazu, die beiden reaktiven Komponenten zu unterscheiden und die Vollständigkeit der Durchmischung festzustellen.

Die DE-A-4001417 beschreibt einen zähelastifizierten zweikomponentigen Epoxidharzklebstoff auf der Basis eines Epoxidharzes und eines Aminhärters, wobei die Harzkomponente einen Farbindikator enthält, der ein homogenes Mischen von Harz und Härter durch Farbumschlag anzeigt.

Die DE-A-4132726 bzw. die DE-A-4112649 beschreiben Klebstoffsysteme auf Basis von Epoxidharzen, denen eine Farbe bzw. ein Farbpigment beigemischt ist, die ihre Farbe beim Härten ändern, so daß die vollständige Härtung der Klebstoffzusammensetzung ermittelt werden kann.

Die EP-A-96500 beschreibt eine zweikomponentige Klebstoffzusammensetzung auf Basis polymerisierbarer Vinyl-Monomeren, Radikalstabilisatoren und einem radikalischen Härtungssystem. Beim Mischen der beiden Komponenten erfolgt ein Farbwechsel, der die Vollständigkeit der Durchmischung ermöglicht und einen sichtbaren Indikator für die beschränkte Topfzeit darstellt. Weiterhin ist der Härtungsvorgang durch einen Farbwechsel begleitet.

Keine der vorgenannten Schriften offenbart einen Indikator für die ausreichende Sauerstoff-Aufnahme von aerob härtbaren Klebstoff-Zusammensetzungen.

Die radikalisch polymerisierbaren Verbindungen der vorliegenden Erfindung enthalten
A) wenigstens ein Polyurethan(methlacrylat der allgemeinen Formel

   [H₂C=CR¹-C(=O)-O-R²-O-C(=O)-NH-]ₙR³ (I)

   worin
   R¹ = Wasserstoff oder eine Methylgruppe
   R² = eine lineare oder verzweigte Alkylgruppe mit 2 bis 6
   Kohlenstoffatomen oder Alkylenoxide mit 4 bis 21
   Kohlenstoffatomen.
   n = 2 oder 3 ist. und
   R³ für n = 2 ist:

   [-Q-NH-C(=O)]₂[{-O-R⁴-O-C(=O)-NH-Q'-NH-C(=O)}ₘ-O-R⁴-O-]

   wobei m = 0 bis 10 ist,
   R⁴
   a) ein Polycaprolactondiol-Rest,
   b) ein Polytetrahydrofurfuryldiol-Rest oder
   c) ein Diol-Rest ist. der sich von einem Polyesterdiol ableitet, der gekennzeichnet ist durch ein C:O-Verhältnis von > 2.6, ein C:H-Verhältnis von < 10 und ein Molekulargewicht von 1000 bis 20000 oder
   d) ein Diol-Rest ist. der sich von einem bei 20 ° C flüssigen Polyester-Diol mit einem Molekulargewicht von 4000 bis 10000, gemesssen mit Hilfe der GPC (Gelpermeationschromatographie) ableitet und
   R³ für n = 3 ist:

   [-Q-NH-C(=O)-O-((CH₂)₅-C(=O))ₚ-]₃ R⁵,

   wobei R⁵ ein Triol-Rest eines 3 bis 6 Kohlenstoffatome enthaltenden, linearen oder verzweigten dreiwertigen Alkohols und p 1 bis 10 ist und
   Q und Q' unabhängig voneinander 6 bis 18 Kohlenstoffatome enthaltende aromatische, aliphatische oder cycloaliphatische Gruppen sind. die sich von Diisocyanaten oder Diisocyanatgemischen ableiten sowie
B) ein oder mehrere (Meth)acrylat-Comonomere enthält.
wobei die Zusammensetzung
20 - 80 Gew.-% des Polyurethan(meth)acrylats sowie
80 - 20 Gew.-% des (Meth)acrylat-Comonomeren. bezogen auf die Gesamtmenge der polymerisierbaren Verbindungen, enthält und das Aktivatorsystem ein Hydrazon-Aktivatorsystem ist.

Die Verbindungen der oben genannten Formel (I) sind herstellbar nach im Stand der Technik an sich bekannten Verfahren durch Umsetzung eines in der Estergruppe Hydroxylgruppen enthaltenden Acrylates (R¹=H) oder Methacrylates (R¹=CH₃) mit Isocyanatgruppen enthaltenden Verbindungen unter Bildung von Urethangruppen.

Bei den Acrylaten oder Methacrylaten handelt es sich erfindungsgemäß um Hydroxyalkylacrylate oder -Methacrylate, wobei die Alkylgruppen linear oder verzweigt sein können und zwischen 2 und 6 Kohlenstoffatome enthalten. Gemäß der Erfindung können auch die Ester von Acrylsäure und Methacrylsäure mit Polyethylenglykol und/oder Polypropylenglykol eingesetzt werden. Derartige Acrylate oder Methacrylate enthalten 4 bis 21 Kohlenstoffatome in der Estergruppe. entsprechend 2 bis 10 Ethylenoxideinheiten und 1 bis 7 Propylenoxideinheiten. Die Herstellung derartiger Ester ist dem Fachmann bekannt.

Geeignete Acrylate oder Methacrylate sind solche, für die R² eine Ethylen-. Propylen-, Isopropylen-, n-Butylen-. Isobutylen-Gruppe oder Ethylenoxid- oder Propylenoxideinheiten enthält.

Bevorzugt für die Umsetzung der Isocyanate mit den Hydroxylgruppen tragenden Acrylaten oder Methacrylaten werden jedoch Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylenglykolmethacrylat, Polypropylenglykolacrylat und Polypropylenglykolmethacrylat.

Bei den Verbindungen der oben genannten allgemeinen Formel (I) für den Fall, daß n = 2 ist, handelt es sich um Umsetzungsprodukte der oben genannten Hydroxylgruppen enthaltenden Acrylate oder Methacrylate mit Isocyanaten, die erhältlich sind durch Reaktion von geeigneten Diolen mit Diisocyanaten. Bei den Diolen handelt es sich um a) Polycaprolactondiole, b) Polytetrahydrofurfuryldiole und c) spezielle Polyesterdiole. Das Molverhältnis bei der Reaktion von den Diolen mit den Diisocyanaten kann im Verhältnis von 1:2 bis zu 1:1.1 variieren.

Für weitere Einzelheiten insbesondere hinsichtlich des detaillierten Aufbaus der Verbindungen der allgemeinen Formel (I) sowie der gemäß a), b) und c) zu verwendenden Diole wird auf die DE-A-4441414 Seite 3 Zeile 60 bis Seite 5 Zeile 5 verwiesen. die ausdrücklich Bestandteil der vorliegenden Erfindung sind.

Die Klebstoffzusammensetzung kann ferner ein oder mehrere Acrylat- oder Methacrylat-Comonomere enthalten. Diese Monomeren sind ausgewählt aus Allylacrylat, Allylmethacrylat. Methylacrylat, Methylmethacrylat 2-Hydroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Glycidylmethacrylat, Piperidylacrylamid, Neopentylmethacrylat, Cyclohexylmethacrylat, tert.-Butylmethacrylat und Tetrahydrofurfurylmethacrylat oder Gemischen davon. Auch Dimethacrylate, wie insbesondere TEGDMA (Tetraethylenglycol-Dimethacrylat), sind brauchbar.

Vorzugsweise enthält die erfindungsgemäße Zusammensetzung 20 bis 70 Gew.-% des Polyurethan(meth)acrylats sowie 80 bis 30 Gew.-% des (Meth)acrylat-Comonomeren, bezogen auf die Gesamtmenge der polymerisierbaren Verbindungen.

Die erfindungsgemäßen Klebstoffzusammensetzungen werden als radikalisch polymerisierbare Einkomponentensysteme eingesetzt. In jedem Fall kommt jedoch ein Starter- oder Aktivatorsystem zum Einsatz, welches die Polymerisation an olefinisch ungesättigten Systemen auslöst. Derartigen Aktivatoren ist die Fähigkeit immanent, durch Zutritt von Umgebungsluft aktivierbar zu sein, wobei diese Aktivierung in bevorzugten Ausführungsformen schon bei Raumtemperatur eintreten soll. Derartige Aktivatorsysteme bestehen in der Regel aus einer Starterkomponente und einer Beschleunigerkomponente.

Einkomponentige Klebstoffsysteme sollen lagerstabil sein, in ihrer Applikationsform formbar, insbesondere pastös bis fließfähig sein und eine zur Verarbeitung hinreichende Topfzeit aufweisen, dann aber durch die einfache Einwirkung von Umgebungsluft formstabil aushärten. Die Einkomponentenklebstoffsysteme müssen bis zum Einsatz vor dem Zutritt von Luft geschützt gehalten werden.

Im Rahmen der Erfindung wurden Hydrazone als Starter oder Hauptkomponente in Aktivatorsystemen für die Aushärtung der ungesättigten Verbindungen mittels Umgebungsluft eingesetzt. Die Hydrazonverbindungen werden bevorzugt mit im System wenigstens anteilsweise löslichen Metallverbindungen für die Beschleunigung eingesetzt.

Die erfindungsgemäß bevorzugt eingesetzten Hydrazonkomponenten entsprechen der nachfolgenden allgemeinen Formel II

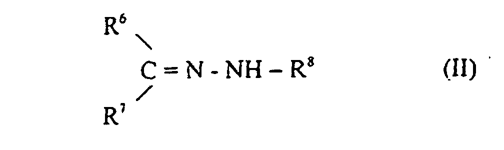

Die Reste R⁶ R⁷ und R⁸ aus dieser allgemeinen Formel (II) haben die nachfolgende Bedeutung:
R⁶ ist ein geradkettiger, verzweigter oder cyclischer und gegebenenfalls substituierter Alkylrest oder ein gegebenenfalls substituierter Arylrest.
R⁷ kann in seiner Bedeutung gleich oder verschieden sein von dem Rest R⁶ und ist dabei Wasserstoff, ein geradkettiger, verzweigter oder cyclischer und gegebenenfalls substituierter Alkylrest oder ein gegebenenfalls substituierter Arylrest.

In einer besonderen Ausführungsform können die Reste R⁶ und R⁷ auch zusammen mit dem gemeinsamen substituierten C-Atom einen cycloaliphatischen Rest bilden, der auch substituiert sein kann.

Der Rest R⁸ ist wieder ein geradkettiger, verzweigter oder cyclischer und gegebenenfalls substituierter Alkylrest oder ein gegebenenfalls substituierter Arylrest.

Die Reste R⁶. R⁷ und R⁸ können insgesamt oder wenigstens anteilsweise gleich sein, jeder dieser Reste kann sich aber auch von den beiden anderen Resten in seiner Struktur unterscheiden. Als Alkylreste kommen insbesondere geradkettige und/oder verzweigte Alkylreste mit bis zu 40 C-Atomen, vorzugsweise bis zu etwa 20 C-Atomen, in Betracht. Cyclische Reste bestimmen sich in ihrer Mindestkohlenstoffzahl durch die Stabilität des jeweiligen Ringsystems. Eine bevorzugte Untergrenze liegt hier bei 5 und insbesondere bei 6 C-Atomen.

Die Reste R⁶, R⁷ und R⁸ können unsubstituiert oder substituiert sein. Zu berücksichtigen ist hier, daß durch Substitution dieser Reste und insbesondere des Restes R⁸ ein gewisser Einfluß auf die Reaktivität des Aktivatorsystems genommen werden kann. Liegt beispielsweise als Rest R⁸ ein aromatisches System, insbesondere ein Phenylrest vor, so kann durch geeignete Substitution dieses Phenylrestes eine Reaktionsbeschleunigung dadurch erreicht werden, daß an sich bekannte Elektronen-schiebende Substituenten an diesem Phenylrest in R⁸ vorgesehen werden. Elektronen-schiebende und damit Reaktionsbeschleunigenden Substituenten sind beispielsweise Alkyl-. Alkoxy- und/oder Halogensubstituenten am Phenylrest in R⁸, umgekehrt wirken stark Elektronen-ziehende Substituenten von der Art der -NO₂-Gruppe verlangsamend auf den Reaktionsablauf ein. Zu solchen Elektronen-schiebenden bzw. Elektronen-ziehenden Effekten durch Substitution und zur Struktur der jeweiligen Substituenten besteht umfangreiches allgemeines Fachwissen. auf das hier verwiesen wird.

Auch den Resten R⁶ und R⁷ aus der allgemeinen Formel II kann durch Wahl der jeweiligen Konstitution und der gegebenenfalls vorgesehenen Substitution die Geschwindigkeit des Reaktionsablaufes beeinflussende Wirkung zukommen.

Zur außerordentlichen Vielgestaltigkeit für die bestimmte Beschaffenheit der Reste R⁶, R⁷ und R⁸ aus den Verbindungen der allgemeinen Formel II gibt die US-PS 4,010,152 mit ihren Formelbildern aus den Spalten 6 bis 14 Aufschluß. Dargestellt sind hier die Hydrazonverbindungen bereits in Form ihrer Hydroperoxide, wie sie sich auch erfindungsgemäß im Reaktionsablauf in situ bei Zutritt von Luftsauerstoff bilden. Die umfangreichen Angaben dieser zuletzt genannten Druckschrift zu der bestimmten Beschaffenheit der Hydrazonverbindungen bzw. der aus ihnen in situ entstehenden Hydroperoxide gelten für die Lehre der Erfindung im Zusammenhang mit der Definition der Verbindungen der allgemeinen Formel II.

Konkrete Beispiele für einzusetzende Hydrazone sind Acetophenon-Methylhydrazon (R⁶ = Phenyl, R⁷ = R⁸ = CH₃), Acetophenon-t-Butylhydrazon (R⁶ = Phenyl, R⁷ = CH₃, R⁸ = C(CH₃)₃).

Für weitere Einzelheiten hinsichtlich der Herstellung und Wirkungsweise der Hydrazone wird auf die WO-A-91/10687 verwiesen.

Zusätzlich können im System anteilsweise lösliche Metallverbindungen vorhanden sein.

Hierbei werden vor allem Metallverbindungen solcher Metalle eingesetzt, die in mehreren Wertigkeitsstufen auftreten können (Trockenstoffe). Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung zukommen. Bei Raumtemperatur hochaktive Komponenten leiten sich z. B. vom Kupfer. Kobalt, Vanadium und/oder Mangan ab. Verbindungen des Eisens kommt allerdings eine besondere Bedeutung und gute Reaktionsbeschleunigung zu.

Für das für viele Anwendungsgebiete besonders vorteilhafte Arbeiten bei Raumtemperatur eignen sich insbesondere Eisen-. Kobalt- und/oder Manganverbindungen, gegebenenfalls in Abmischung mit weiteren metallischen Komponenten wie Verbindungen des Blei, Cer. Calcium, Barium, Zink und/oder Zirkon. Es kann hier auf die einschlägige Fachliteratur verwiesen werden. Eine ausführliche Darstellung solcher Systeme findet sich beispielsweise in "Ullmann, Encyclopedie der technischen Chemie", 4. Auflage. Band 23 (1983), Seite 421 bis 424.

Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate, Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungseemäßen System eine deutlich beschleunigende Wirkung zeigt.

Es kann zweckmäßig sein. die Metallverbindungen jeweils in einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So kann beispielsweise Eisen auch in Form der Fe³⁺-Verbindungen verwendet werden.

Zusätzlich können die erfindungsgemäßen Zusammensetzungen Reduktionsmittel mit Beschleuniserwirkung enthalten. wie sie in üblichen Redoxsystemen zur Polymerisationsauslösung eingesetzt werden. Verwiesen wird auf die einschlägige umfangreiche Literatur, beispielsweise W. Kern, Makromol. Chem. 1, 249 (1947) sowie C. Sma, Angew. makromol. Chem. 9, 165 (1969) sowie das allgemeine Fachwissen, wie es z. B. beschrieben ist in Houben Weyl "Methoden der organischen Chemie" Band 14/1. 263 bis 297.

Als besonders aktiv hat sich hier die Klasse der Alpha-Hvdroxyketone, beispielsweise mit ihren Vertretern Butyroin, Benzoin oder Azetoin erwiesen, die Lehre der Erfindung ist jedoch keineswegs hierauf eingeschränkt. Auf die in den erfindungsgemäßen Beispielen dargestellten Modifikationen wird verwiesen. Wesentlich ist, daß diese Stoffklasse in den erfindungsgemäß eingesetzten Aktivatorsystemen zwar eine wichtige reaktionsbeschleunigende Funktion übernehmen kann, daß jedoch ihre Mitverwendung nicht zwingend ist.

Starter bzw. Aktivatorsysteme aus den hier geschilderten Hauptkomponenten Hydrazonverbindung, wenigstens anteilsweise löslicher metallischer Trockenstoff und/oder gewünschtenfalls mitverwendeter Beschleuniger sind in der Lage, nach Aufnahme von Umgebungsluft alle die radikalisch polymerisierbaren olefinisch ungesättigten Systeme zu initiieren, die bisher mit den verschiedenartigsten insbesondere peroxidischen Startersystemen eingesetzt werden. Zur Definition der weiteren Bestandteile der erfindungsgemäß beschriebenen formgebend verarbeitbaren radikalisch polymerisierbaren Mehrstoffgemische kann insoweit auf die umfangreichen Angaben der einschlägigen Literatur Bezug genommen werden. die sich mit der Herstellung und Verarbeitung von Systemen beschäftigt, die auf Basis olefinisch ungesättigter radikalisch polymerisierbarer Verbindungen aufgebaut sind. In der Fachwelt steht heute eine außerordentlich große Zahl von Stoffsystemen dieser Art zur Verfügung, die auf den jeweiligen Einsatzzweck in ihren Eigenschaften zugeschnitten sind. Olefinisch ungesättigte Reaktivsysteme können dabei auf der Grundlage ausgewählter radikalisch polymerisierbarer ethylenisch ungesättigter Verbindungen oder auf Basis von Mischungen mehrerer Typen solcher Verbindungen aufgebaut sein. Die ethylenisch ungesättigten polymerisierbaren Komponenten können dabei einfunktionelle Verbindungen und/oder mehrfunktionelle Reaktivkomponenten sein.

Als Indikator für die ausreichende Sauerstoff-Aufnahme der erfindungsgemäßen aerob härtbaren Zusammensetzungen finden an sich bekannte Farbstoffe Verwendung. Auswahlkriterium für diese Farbstoffe ist ein deutlich sichtbarer Farbwechsel der mit der ausreichenden Sauerstoffaufnahme der Klebstoffzusammensetzung korrelieren muß. Unter Farbwechsel wird dabei die Ausbildung einer vom Ursprungszustand unterschiedlichen Farbe oder die Abnahme oder Zunahme der Intensität der ursprünglichen Farbe verstanden. Außerdem darf der Zusatz der Farbstoffe in den einzusetzenden Konzentrationsbereichen die physikalischen Eigenschaften des härtbaren Systems sowie seine Abbindeeigenschaften nicht negativ beeinflussen.

Bekanntlich sind Leukofarbstoffe wie Leukokristallviolet und Leukomalachitgrün gegen die Oxidation empfindlich und weisen nach Oxidation einen deutlichen Farbwechsel auf. Untersuchungen in den erfindungsgemäßen Klebstoff-Zusammensetzungen mit diesen Leukofarbstoffen zeigten zwar eine Farbveränderung in Abhängigkeit von der Kontaktzeit mit der Luft, diese Farbveränderung korrelierte jedoch nicht mit dem Polymerisationsgrad.

Erfindungsgemäß eignen sich Farbstoffe und Indikatoren. deren Farbumschlag in wässriger Lösung in einem pH-Bereich von 3,0 bis 6,5 liegt. Konkrete Beispiele für derartige Farbstoffe sind Bromphenolblau, Bromchlorphenolblau, Bromkresolerün, 5-Nitroindazolinon. Alizarin S. Methylrot, Ethylrot. Die Menge der einzusetzenden Farbstoffe bemißt sich nach dem Einsatzzweck sowie nach der Eigenfarbe der Klebstoff-Zusammensetzung ohne den Farbstoff. Sie kann im Einzelfall durch fachgerechte Überlegungen und/oder durch Vorversuche einfach ermittelt werden. Ganz allgemein beträgt der Gewichtsanteil an Farbstoffen höchstens 5 Gew.-%. vorzugsweise 0.01 bis 2 Gew.-% bezogen auf die gesamte Zusammensetzung.

Der Reinheit der Zusammensetzung kommt für die gezielte Polymerisation, insbesondere für die Lagerung eine besondere Bedeutung zu. Der Sauerstoff kann erfindungsgemäß durch Entgasung entfernt werden. Dazu wird bevorzugt die homogenisierte Zusammensetzung ohne das Hydrazon bei ca. -196 °C für 2 bis 5 Minuten einem Vakuum von 0.5 Torr ausgesetzt und anschließend auf Raumtemperatur erwärmt. Durch mehrmaliges Wiederholen dieses Gefrier/Tau-Zykluses wird restlicher Sauerstoff aus dem System entfernt. Eine einfache und praxisnahe Bestimmung besteht darin, die Zusammensetzung bei 80 °C unter Ausschluß von Luft aufzubewahren. Nach 24 Stunden darf noch keine Polymerisation eingetreten sein.
Die Entgasung kann auch auf anderem Wege durchgeführt werden. z.B. mit Hilfe von Ultraschall oder auf chemischem Wege.

Es ist bekannt, daß Olefine und andere ungesättigte Verbindungen. insbesondere polymerisierbare Monomere für ihre Lagerung stabilisiert werden müssen. Dabei geht man von folgenden Grundtypen der Reaktion aus:
1. Stabilisierung gegen O₂ durch Zusatz von Antioxidantien und
2. Stabilisierung gegen Radikale durch Zusatz von Radikalinhibitoren.

Aus dem allgemeinen chemischen Wissen seien im nachfolgenden typische Stabilisatorkomponenten aufgezählt. wobei jeweils in Klammern hinter der speziellen Verbindung angegeben ist, welchem Mechanismus der Stabilisator zuzuordnen ist: Pyrogallol (1), O₂-inhibierte Acrylate (1), Hydrochinon (1,2), Hydrochinonmonomethylether (1,2), Butylhydroxytoluol (2) und Phenothiazin (2). Besondere Bedeutung zur Stabilisierung des Systems gegen unerwünschte vorzeitige Abreaktion sind Desoxygenatoren vom Typ des Triphenylphosphins sowie Jodid-Jod-Lösungen. Ihre Menge bemißt sich nach den Einsatzzweck. Sie kann im Einzelfall durch fachgerechte Überlegungen und/oder durch Vorversuche einfach ermittelt werden. Ganz allgemein beträgt der Gewichtsanteil an Stabilisatoren höchstens 5 Gew.-%. vorzugsweise 0.01 bis 1 Gew.-%. bezogen auf die gesamte Zusammensetzung. Eine zu hohe Menge verzögert die gewünschte Polymerisation bei Zutritt von Luft.

Die erfindungsgemäßen Zusammensetzungen werden bevorzugt als aerob härtende Dichtungsmaterialien oder Klebstoffe eingesetzt. Sie können jedoch auch als streichfähiges Mittel für Oberflächenbeschichtungen, als Formmasse oder als Zusatz zu Tinten und Druckfarben eingesetzt werden. Hierzu kann es notwendig sein. daß neben den bereits benannten Bestandteilen lösliche und/oder unlösliche Füllstoffe, Elastifizierungsmittel, Verdickungsmittel, Thixotropierungsmittel, Pigmente. Haftvermittler und dergleichen mitverwendet werden, ohne daß die Funktionsfähigkeit des erfindungsgemäßen Startersystems gefährdet ist. Voraussetzung hierfür ist natürlich. daß durch Auswahl der Hilfs- und Füllstoffe sichergestellt ist, Störungen in der Interaktion der Starterkomponenten auszuschließen. Hierzu gilt allgemeines chemisches Wissen.

Die erfindungsgemäßen Zusammensetzungen enthalten. bezogen auf die gesamte Zusammensetzung:
- wenigstens 20, vorzugsweise wenigstens 40 Gew.-% an radikalisch polymerisierbaren Verbindungen mit olefinisch ungesättigter Doppelbindung
- wenigstens 0,1, vorzugsweise 0.5 bis 7,5 und insbesondere 1 bis 4 Gew.-% einer Hydrazon-Verbindung.
- 0 bis 5. vorzugsweise 0,01 bis 1 Gew.-% an Stabilisator.
- 0 bis 5, vorzugsweise 0,005 bis 1 und insbesondere 0,1 bis 0,5 Gew.-% einer Metallverbindung,
- 0 bis 80, vorzugsweise 10 bis 50 Gew.-% an Hilfsstoffen entsprechend der Verwendung der Zusammensetzung, z.B. Füllstoffe, Pigmente, Verdickungsmittel, Haftvermittler und Elastifzierungsmittel sowie
- 0,01 bis 5 Gew.-% eines Indikatorfarbstoffes.

Die nachfolgenden Beispiele dienen der konkreten Erläuterung bevorzugter Ausführungsformen der Erfindung.

### Beispiele

Es wurde eine aerobe Klebstoffzusammensetzung aus 40 Gew.-% Benzylmethacryat, 12 Gew.-% Hydroxypropylmethacrylat und 48 Gew.-% Polyurethanmethacrylat aus einem Polycaprolactontriol und einem Polycaprolactondiol sowie Toluenediisocyanat und Hydroxypropylmethacrylat hergestellt, so wie es im Beispiel V 1) auf Seite 10 der DE 44 41 414 A1 beschrieben ist. Die Klebstoffzusammensetzung enthielt ebenfalls die auf Seite 11 dieser Schrift genannten Zusätze von Acetophenon-tert.butylhydrazon als Starter sowie weitere übliche Zusatzstoffe, insbesondere die vorgenannten Stabilisatoren.

In 250 g dieser Klebstoffzusammensetzung wurden 50 mg Bromchlorphenolblau als Farbstoff gelöst.

Die Zusammensetzung wurde hinsichtlich ihrer Klebeeigenschaften beim Verkleben mit den verschiedensten Substraten untersucht (DIN 53281, 53282 und 53283). Dazu wurden 5 Tropfen der Klebstoffzusammensetzung (ca. 60 mg) einseitig auf das betreffende Substrat aufgetragen und nach einer Luftkontaktzeit von 5 Minuten gefügt. Nach dieser Luftkontaktzeit wurde ein Farbumschlag von gelborange (der ursprünglichen Farbe der Klebstoffzusammensetzung) nach grün beobachtet.

In der nachfolgenden Tabelle sind die Festigkeitswerte der erzielten Verklebung nach der oben angegebenen Luftkontaktzeit aufgeführt. Diese Werte sind Mittelwerte, die aus wenigstens 5 Messungen ermittelt wurden. "KB" bedeutet Kohesionsbruch in der Klebstofffuge, "MB" bedeutet Materialbruch des Substrates. Die Zeitangaben für die Lagerung beziehen sich auf die Lagerzeit der verklebten Substrate vor der entsprechenden Festigkeitsprüfung.

| | Kraft [N] (Mittelwert) | Zugscherfestigkeit [N/mm²] (Mittelwert) | Bruch | Durchhärtung |
|---|---|---|---|---|
| Alu.: sandgestrahlt (n. 72 h - Lagerung) | 4164 | 16,7 | KB | i.O. |
| Standardabweichung: | ±314,1 | ±1,3 | | |
| Stahl: sandgestrahlt (n. 3 h 80 °C -Lagerung) | 6582 | 26,3 | KB | i.O. |
| Standardabweichung: | ±136,0 | ±0,5 | | |
| Stahl: sandgestrahlt (n. 72 h - Lagerung) | 5734 | 22,9 | KB | i.O. |
| Standardabweichung: | ±405,1 | ±1,6 | | |
| Stahl: sandgestrahlt (n. 72 h + 3 h 80 °C -Lagerung) | 5878 | 23,5 | KB | i.O. |
| Standardabweichung: | ±306,4 | ±1,2 | | |
| ABS: glatt (n. 72 h - Lagerung) | 2390 | 9,6 | MB | |
| Standardabweichung: | ±26,1 | ±0,1 | | |
| PVC: glatt (n. 72 h - Lagerung) | 2236 | 8,9 | MB | |
| Standardabweichung: | ±507,3 | ±2,0 | | |
| PC: glatt (n. 72 h - Lagerung) | 2198 | 8,8 | MB | |
| Standardabweichung: | ±583,4 | ±2,3 | | |
| Alu: sandgestrahlt (n. 3 h 80 ° C -Lagerung) | 4574 | 18,3 | KB | i.O. |
| Standardabweichung: | ±171,7 | ±0,7 | | |
| Stahl: sandgestrahlt (n. 3 h 80 ° C -Lagerung) | 5692 | 22,8 | KB | i.O. |
| Standardabweichung: | ±374,3 | ±1,5 | | |
| ABS: glatt (n. 3 h 80 ° C -Lagerung) | 2254 | 9,0 | MB | |
| Standardabweichung: | ±115,0 | ±0,5 | | |
| PVC: glatt (n. 3 h 80 ° C -Lagerung) | 1596 | 6,4 | MB | |
| Standardabweichung: | ±250,8 | ±1,0 | | |
| PC: glatt (n. 3 h 80 ° C -Lagerung) | 1854 | 7,4 | MB | |
| Standardabweichung: | ±107,1 | ±0,4 | | |

Aus diesen Versuchsergebnissen wird deutlich. daß der Farbumschlag eindeutig mit der notwendigen Sauerstoffaufnahme des aeroben Klebstoffes korreliert.

In ähnlicher Weise ergaben sich bei den Farbstoffen Bromphenolblau und 5-Nitroindazolinon eine eindeutige Korrelation des deutlich sichtbaren Farbumschlages mit der notwendigen Sauerstoffaufnahme der aeroben Klebstoffzusammensetzung.

## Patentansprüche

1. Aerob härtbare Zusammensetzung auf der Basis von radikalisch polymerisierbaren Verbindungen, **dadurch gekennzeichnet, daß** sie ein Aktivator-System zur Ausbildung von Peroxiden und einen Farbstoff als Indikator für die Sauerstoff-Aufnahme enthält.

2. Zusammensetzung nach Anspruch 1, **dadurch gekennzeichnet, daß** die radikalisch polymerisierbare Verbindungen
A) wenigstens ein Polyurethan(meth)acrylat der allgemeinen Formel
[H₂C=CR¹-C(=O)-O-R²-O-C(=O)-NH-]ₙ R³ (I)
enthält, worin
R¹ = Wasserstoff oder eine Methylgruppe
R² = eine lineare oder verzweigte Alkylgruppe mit 2 bis 6
Kohlenstoffatomen oder Alkylenoxide mit 4 bis 21
Kohlenstoffatomen,
n = 2 oder 3 ist und
R³ für n = 2 ist:
[-Q-NH-C(=O)]₂[{-O-R⁴-O-C(=O)-NH-Q'-NH-C(=O)}ₘ-O-R⁴-O-]
wobei m = 0 bis 10 ist,
R⁴
a) ein Polycaprolactondiol-Rest,
b) ein Polytetrahydrofurfuryldiol-Rest oder
c) ein Diol-Rest ist. der sich von einem Polyesterdiol ableitet, der **gekennzeichnet ist durch** ein C:O-Verhältnis von > 2,6, ein C:H-Verhältnis von < 10 und ein Molekulargewicht von 1000 bis 20000 oder
d) ein Diol-Rest ist. der sich von einem bei 20 °C flüssigen Polyester-Diol mit einem Molekulargewicht von 4000 bis 10000, gemessen mit Hilfe der GPC (Gelpermeationschromatographie) ableitet und
R³ für n = 3 ist:
[-Q-NH-C(=O)-O-((CH₂)₅-C(=O))ₚ-]₃ R⁵,
wobei R⁵ ein Triol-Rest eines 3 bis 6 Kohlenstoffatome enthaltenden. linearen oder verzweigten dreiwertigen Alkohols und P 1 bis 10 ist und
Q und Q' unabhängig voneinander 6 bis 18 Kohlenstoffatome enthaltende aromatische. aliphatische oder cycloaliphatische Gruppen sind, die sich von Diisocyanaten oder Diisocyanatgemischen ableiten.
B) ein oder mehrere (Meth)acrylat-Comonomere enthält.
wobei die Zusammensetzung
20-80 Gew.-% des Polyurethan(meth)acrylates sowie
80-20 Gew.-% des (Meth)acrylat-Comonomeren.
bezogen auf die Gesamtmenge der polymerisierbaren Verbindungen. enthält und das Aktivatorsystem ein Hydrazon-Aktivatorsystem ist.

3. Zusammensetzung nach Anspruch 1 oder 2. **dadurch gekennzeichnet, daß** sie
- 20-70 Gew.-% des Polyurethan(meth)acrylats und
80-30 Gew.-% des (Meth)acrylat-Comonomeren, jeweils bezogen auf die Gesamtmenge der polymerisierbaren Verbindungen, enthält.

4. Zusammensetzung nach mindestens einem der vorgehenden Ansprüche, **dadurch gekennzeichnet, daß** R² ausgewählt ist aus Ethylen-, Propylen-, i-Propylen-, n-Butylen- oder i-Butylen-, Ethylenoxid- oder Propylenoxid-Einheiten.

5. Zusammensetzung nach einem oder mehreren der vorhergehenden Ansprüche. **dadurch gekennzeichnet, daß** sich Q und Q' unabhängig voneinander ableiten aus Diisocyanaten, die ausgewählt sind aus 2,4-Toluendiisocyanat, 2.6-Toluendiisocyanat, 4,4'-Diphenylmethandiisocyanat (MDI), 4.4'-Dicyclohexyldiisocyanat, meta - und para-Tetramethyl-xylendiisocyanat, 3-Isocyanatomethyl-3,5,5-trimethylcyclohexylisocyanat (Isophorondiisocyanat). Hexamethylendiisocyanat, 1,5-Naphthylendiisocyanat, Dianisidindiisocyanat, Di(2-isocyanatoethyl)-bicyclo[2,2,1]-hept-5-en-2,3-dicarboxylat, 2,2,4- und 2,4,4-Trimethylhexamethylendiisocyanat und Gemischen daraus.

6. Zusammensetzung nach einem oder mehreren der vorhergehenden Ansprüche. **dadurch gekennzeichnet, daß** das (Meth)acrylat-Comonomer (B) ausgewählt ist aus Allylacrylat, Allylmethacrylat, Methylacrylat, Methylmethacrylat 2-Hydroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Glycidylmethacrylat, Piperidylacrylamid, Neopentylmethacrylat, Cyclohexylmethacrylat, tert.-Butylmethacrylat und Tetrahydrofurfurylmethacrylat oder Gemischen davon sowie Dimethacrylat.

7. Zusammensetzung nach mindestens einem der vorgehenden Ansprüche, **dadurch gekennzeichnet, daß** für das Aktivatorsystem Hydrazon-Verbindungen der allgemeinen Formel (II) eingesetzt werden 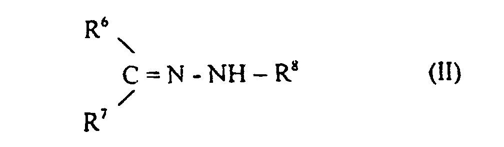 in der die Reste R⁶, R⁷ und R⁸ wenigstens anteilsweise gleich oder verschieden sind und die nachfolgende Bedeutung haben:
R⁶: ein geradkettiger, verzweigter oder cyclischer und gegebenenfalls substituierter Alkylrest oder ein gegebenenfalls substituierter Arylrest,
R⁷: Wasserstoff, ein geradkettiger, verzweigter oder cyclischer und gegebenenfalls substituierter Alkylrest oder ein gegebenenfalls substituierter Arylrest,
wobei R⁶ und R⁷ zusammen mit dem gemeinsam substituierten C-Atom auch einen cycloaliphatischen Rest bilden können, der auch substituiert sein kann.
R⁸: ein geradkettiger, verzweigter oder cyclischer und gegebenenfalls substituierter Alkylrest oder ein gegebenenfalls substituierter Arylrest.

8. Zusammensetzung nach Anspruch 7, **dadurch gekennzeichnet, daß** als im System wenigstens anteilsweise lösliche Metallverbindungen solche des Eisens, des Kupfers. des Kobalts und/oder des Mangans vorliegen, wobei der Einsatz löslicher Verbindungen des 2- und/oder 3-wertigen Eisens bevorzugt ist.

9. Zusammensetzung nach Ansprüchen 7 bis 8, **dadurch gekennzeichnet, daß** als Beschleuniger übliche Mischungskomponenten mit Reduktionspotential aus Radikalpolymerisationen auslösenden Redox-Systemen eingesetzt werden.

10. Zusammensetzung nach Ansprüchen 7 bis 9, **dadurch gekennzeichnet, daß** die Komponenten des Startersystems in den folgenden Konzentrationen - bezogen jeweils auf Gesamtmischung - zum Einsatz kommen:
Hydrazon-Verbindungen: wenigstens etwa 0.1 Gew.-%. zweckmäßig 0.5 bis 7.5 Gew.-%. vorzugsweise 1 bis 4 Gew.-%
Metall aus löslicher Metallverbindung: 0 bis einige Gew.-%. zweckmäßig 50 ppm bis 1 Gew.-%, vorzugsweise 1000 bis 5000 ppm
Reduktionsmittel: 0 bis 5 Gew.-%, vorzugsweise 1 bis 3 Gew.-%

11. Zusammensetzung nach Ansprüchen 7 bis 10, **dadurch gekennzeichnet, daß** als Reduktionsmittel mit Beschleunigerwirkung Alpha-Hydroxyketone eingesetzt werden.

12. Zusammensetzung nach mindestens einem der vorhergehenden Ansprüche, **dadurch gekennzeichnet, daß** als Farbstoff ein an sich bekannter Indikator verwendet wird, dessen Farbumschlag in wässriger Lösung in einem pH-Bereich von 3,0 bis 6,5 liegt.

13. Zusammensetzung nach Anspruch 12, **dadurch gekennzeichnet, daß** der Farbumschlag von farblos/gelblich nach rot/blau, grün oder den Komplementärfarben von rot, blau, grün und gelb erfolgt.

14. Zusammensetzung nach Anspruch 12 oder 13, **dadurch gekennzeichnet, daß** der Farbstoff aus der Gruppe 5-Nitroindazolinon, Bromphenolblau, Bromchlorphenolblau, Bromkresolgrün, Alizarin S, Methylrot, Ethylrot ausgewählt wird.

15. Verfahren zur Herstellung der Zusammensetzung, wie in den Ansprüchen 1 bis 14 definiert ist, durch Homogenisierung der polymerisierbaren Verbindung oder den Verbindungen, des Aktivatorsystems. der Farbstoffkomponente und gegebenenfalls weiteren Zusätzen.

16. Verwendung der Zusammensetzung nach einem oder mehreren der Ansprüche 1 bis 14, als aerob härtendes Dichtungs- und Klebstoffsystem, streichfähiges Mittel für die Oberflächenbeschichtung. Formmasse oder als Zusatz zu Tinten und Druckfarben.

## Claims

1. An aerobically curable composition based on free-radically polymerizable compounds, which comprises an activator system for forming peroxides, and a dye as an indicator of the uptake of oxygen.

2. A composition as claimed in claim 1, wherein said free-radically polymerizabie compounds comprise
A) at least one polyurethane (meth)acrylate of the general formula
[H₂C=CR¹-C(=O)-O-R²-O-C(=O)-NH-]ₙR³ (I)
in which
R¹ = hydrogen or a methyl group
R² = a linear or branched alkyl group having 2 to 6 carbon atoms or alkylene oxides having 4 to 21 carbon atoms,
n = 2 or 3, and
R³ if n = 2 is:
[-Q-NH-C(=O)]₂[{-O-R⁴-O-C(=O)-NH-Q'-NH-C(=O)}ₘ-O-R⁴-O-]
in which m = 0 to 10,
R⁴ is
a) a polycaprolactonediol radical,
b) a polytetrahydrofurfuryldiol radical or
c) a diol radical derived from a polyester diol
**characterized by** a C:O ratio of >2.6, a C:H ratio of <10, and a molecular weight from 1000 to 20,000, or
d) a diol radical derived from a polyester-diol which is liquid at 20°C and has a molecular weight of from 4000 to 10,000, measured with the aid of GPC (gel permeation chromatography), and
R³ if n = 3 is:
[-Q-NH-C(=O)-O-((CH₂)₅-C(=O))ₚ-]₃R⁵
in which R⁵ is a triol radical of a linear or branched trivalent alcohol containing 3 to 6 carbon atoms and p is from 1 to 10, and
Q and Q', independently of one another, are aromatic, aliphatic or cycloaliphatic groups which contain 6 to 18 carbon atoms and are derived from diisocyanates or mixtures of diisocyanates, and also
B) one or more (meth)acrylate comonomers,
where said composition
comprises 20 - 80% by weight of the polyurethane (meth)acrylate, and 80 - 20% by weight of the (meth)acrylate comonomer, based on the overall amount of polymerizable compounds, and the activator system is a hydrazone activator system.

3. A composition as claimed in claim 1 or 2, which comprises
- 20-70% by weight of the polyurethane (meth)acrylate and
- 80-30% by weight of the (meth)acrylate comonomer, based in each case on the overall amount of polymerizable compounds.

4. A composition as claimed in at least one of the preceding claims, wherein R² is selected from ethylene, propylene, isopropylene, n-butylene or isobutylene, ethylene oxide or propylene oxide units.

5. A composition as claimed in one or more of the preceding claims, wherein Q and Q' independently of one another are derived from diisocyanates selected from 2,4-toluene diisocyanate, 2,6-toluene diisocyanate, 4,4'-diphenylmethane diisocyanate (MDI), 4,4'-dicyclohexyldiisocyanate, meta- and para-tetramethylxylene diisocyanate, 3-isocyanatomethyl-3,5,5-trimethylcyclohexyl isocyanate (isophorone diisocyanate), hexamethylene diisocyanate, 1,5-naphthylene diisocyanate, dianisidine diisocyanate, di(2-isocyanatoethyl) bicyclo[2.2.1]hept-5-ene-2,3-dicarboxylate, 2,2,4- and 2,4,4-trimethylhexamethylene diisocyanate, and mixtures thereof.

6. A composition as claimed in one or more of the preceding claims, wherein the (meth)acrylate comonomer (B) is selected from allyl acrylate, allyl methacrylate, methyl acrylate, methyl methacrylate, 2-hydroxyethyl acrylate, 2-hydroxyethyl methacrylate, 2- or 3-hydroxypropyl acrylate, 2- or 3-hydroxypropyl methacrylate, 6-hydroxyhexyl acrylate, 6-hydroxyhexyl methacrylate, benzyl methacrylate, phenylethyl methacrylate, 2-phenoxyethyl methacrylate, morpholinoethyl methacrylate, glycidyl methacrylate, piperidylacrylamide, neopentyl methacrylate, cyclohexyl methacrylate, tert-butyl methacrylate, and tetrahydrofurfuryl methacrylate, or mixtures thereof, and also dimethacrylate.

7. A composition as claimed in at least one of the preceding claims, wherein for the activator system use is made of hydrazone compounds of the general formula (II) 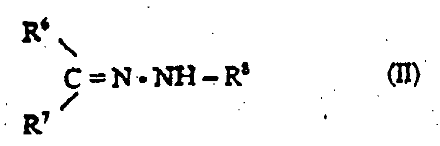 in which the radicals R⁶, R⁷ and R⁸ are at least partially identical or different and have the following meanings:
R⁶: a straight-chain, branched or cyclic and optionally substituted alkyl radical or an optionally substituted aryl radical,
R⁷: hydrogen, a straight-chain, branched or cyclic and optionally substituted alkyl radical, or an optionally substituted aryl radical,
it also being possible for R⁶ and R⁷, together with the shared substituted carbon atom, to form a cycloaliphatic radical, which may also be substituted;
R⁸: a straight-chain, branched or cyclic and optionally substituted alkyl radical or an optionally substituted aryl radical.

8. A composition as claimed in claim 7, wherein metal compounds at least partially soluble in the system, and present, are those of iron, of copper, of cobalt and/or of manganese, preference being given to the use of soluble compounds of divalent and/or trivalent iron.

9. A composition as claimed in claim 7 or 8, wherein customary co-components with reduction potential from redox systems which initiate free-radical polymerizations are used as accelerators.

10. A composition as claimed in any of claims 7 to 9, wherein the components of the initiator system are used in the following concentrations, based in each case on the overall mixture:
hydrazone compounds: at least about 0.1% by weight, judiciously from 0.5 to 7.5% by weight, preferably from 1 to 4% by weight,
metal from soluble metal compound: 0 to a few % by weight, judiciously from 50 ppm to 1% by weight, preferably from 1000 to 5000 ppm
reducing agent(s): from 0 to 5% by weight, preferably from 1 to 3% by weight.

11. A composition as claimed in any of claims 7 to 10, wherein alpha-hydroxy ketones are used as reducing agents having an accelerator action.

12. A composition as claimed in at least one of the preceding claims, wherein the dye used is a conventional indicator whose color change in aqueous solution lies within a pH range from 3.0 to 6.5.

13. A composition as claimed in claim 12, wherein the color change takes place from colorless/yellowish to red/blue, green or the complementary colors of red, blue, green, and yellow.

14. A composition as claimed in claim 12 or 13, wherein said dye is selected from the group consisting of 5-nitroindazolinone, bromophenol blue, bromochlorophenol blue, bromocresol green, alizarin S, methyl red, and ethyl red.

15. A process for preparing a composition as defined in any of claims 1 to 14 by homogenizing the polymerizable compound or compounds, the activator system, the dye component, and further additives if present.

16. The use of a composition as claimed in one or more of claims 1 to 14 as an aerobically curing sealing and adhesive system, spreadable composition for surface coating, molding compound, or additive to inks, including printing inks.

## Revendications

1. Composition durcissable dans des conditions aérobies à base de composés polymérisables par voie radicalaire, **caractérisée en ce qu'**elle contient un système d'activateur pour la formation de peroxyde et un colorant à titre d'indicateur pour l'absorption d'oxygène.

2. Composition selon la revendication 1, **caractérisée en ce que** les composés polymérisables par voie radicalaire contiennent
A) au moins un (méth)acrylate de polyuréthane répondant à la formule générale
[H₂C=CR¹-C(=O)-O-R²-O-C(=O)-NH-]ₙ R³ (I)
dans laquelle
R¹ représente un atome d'hydrogène ou un groupe méthyle,
R² représente un groupe alkyle linéaire ou ramifié contenant de 2 à 6 atomes de carbone ou encore des oxydes d'alkylènes contenant de 4 à 21 atomes de carbone,
n est égal à 2 ou 3, et
R³ représente, pour n = 2 :
[-Q-NH-C(=O)]₂[{-O-R⁴-O-C(=O)-NH-Q'-NH-C(=O)}ₘ-O-R⁴-O-]
formule dans laquelle m représente un nombre de 0 à 10, R⁴ représente
a) un radical de polycaprolactone-diol,
b) un radical de polytétrahydrofurturyl-diol ou
c) un radical de diol qui dérive d'un polyesterdiol qui se **caractérise par** un rapport C : O > 2,6, un rapport C : H < 10 et un poids moléculaire de 1000 à 20.000, ou
d) un radical de diol qui dérive d'un polyesterdiol liquide à 20 °C possédant un poids moléculaire de 4000 à 10.000 mesuré à l'aide de la GPC (chromatographie par perméation sur gel) et
R³ représente, pour n = 3 :
[-Q-NH-C(=O)-O-((CH₂)₅-C(=O))ₚ-]₃ R⁵.
formule dans laquelle R⁵ représente un radical de triol d'un alcool trivalent, linéaire ou ramifié, contenant de 3 à 6 atomes de carbone et m représente un nombre de 1 à 10 et
Q et Q' représentent, indépendamment l'un de l'autre, des groupes aromatiques, aliphatiques ou cycloaliphatiques contenant de 6 à 18 atomes de carbone, qui dérivent de diisocyanates ou de mélanges de diisocyanates ;
B) un ou plusieurs comonomères de (méth)acrylate, la composition contenant
le (méth)acrylate de polyuréthane à concurrence de 20 à 80 % en poids et le comonomère de (méth)acrylate à concurrence de 80 à 20 % en poids,
rapportés à la quantité totale des composés polymérisables, et le système d'activateur est un système d'activateur à base d'hydrazone.

3. Composition selon la revendication 1 ou 2, **caractérisée en ce qu'**elle contient le (méth)acrylate de polyuréthane à concurrence de 20 à 70 % en poids et le comonomère de (méth)acrylate à concurrence de 80 à 30 % en poids, chaque fois rapportés à la quantité totale des composés polymérisables.

4. Composition selon au moins une des revendications précédentes, **caractérisée en ce que** R² est choisi parmi le groupe comprenant des unités d'éthylène, de propylène, de i-propylène, de n-butylène ou de i-butylène, d'oxyde d'éthylène ou d'oxyde de propylène.

5. Composition selon une ou plusieurs des revendications précédentes, **caractérisée en ce que** Q et Q' dérivent, indépendamment l'un de l'autre, de diisocyanates qui sont choisis parmi le groupe comprenant le 2,4-toluylènediisocyanate, le 2,6-toluylènediisocyanate, le 4,4'-diphénylméthanediisocyanate (MDI), le 4,4'-dicyclohexyldiisocyanate, le méta- et le para-tétraméthyl-xylènediisocyanate, le 3-isocyanatométhyl-3,5,5-triméthylcyclohexylisocyanate (isophoronediisocyanate), l'hexaméthylènediisocyanate, le 1,5-naphtylènediisocyanate, le dianisidinediisocyanate, le di(2-isocyanatoéthyl)-bicyclo[2,2,1]-hept-5-ène-2,3-dicarboxylate, le 2,2,4- et le 2,4,4-triméthylhexaméthylènediisocyanate et leurs mélanges.

6. Composition selon une ou plusieurs des revendications précédentes, **caractérisée en ce que** le comonomère de (méth)acrylate (B) est choisi parmi le groupe comprenant l'acrylate d'allyle, le méthacrylate d'allyle, l'acrylate de méthyle, le méthacrylate de méthyle, l'acrylate de 2-hydroxyéthyle, le méthacrylate de 2-hydroxyéthyle, l'acrylate de 2- ou 3-hydroxypropyle, le méthacrylate de 2- ou 3-hydroxypropyle, l'acrylate de 6-hydrokyhexyle, le méthacrylate de 6-hydroxyhexyle, le méthacrylate de benzyle, le méthacrylate de phényléthyle, le méthacrylate de 2-phénoxy-éthyle, le méthacrylate de morpholinoéthyle, le méthacrylate de glycidyle, le pipéridylacrylamide, le méthacrylate de néopentyle, le méthacrylate de cyclohexyle, le méthacrylate de tert.-butyle et le méthacrylate de tétrahydrofurfuryle, ou leurs mélanges; de même que le diméthacrylate.

7. Composition selon une ou plusieurs des revendications précédentes, **caractérisée en ce qu'**on met en oeuvre pour le système d'activateur, des composés à base d'hydrazone répondant à la formule générale II 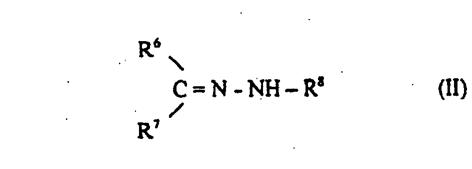 dans laquelle les radicaux R⁶, R⁷ et R⁸ sont au moins en partie identiques ou différents et possèdent la signification ci-après :
R⁶ représente un radical alkyle à chaîne droite, ramifié ou cyclique et éventuellement substitué ou représente un radical aryle le cas échéant substitué ;
R⁷ représente un atome d'hydrogène, un radical alkyle à chaîne droite, ramifié ou cyclique et éventuellement substitué ou représente un radical aryle le cas échéant substitué ;
R⁶ et R⁷ pouvant également former, ensemble avec l'atome de carbone substitué de manière conjointe, un radical cycloaliphatique qui peut quant à lui être également substitué ;
R⁸ représente un radical alkyle à chaîne droite, ramifié ou cyclique et éventuellement substitué ou représente un radical aryle le cas échéant substitué.

8. Composition selon la revendication 7, **caractérisée en ce que**, à titre de composés métalliques au moins en partie solubles dans le système, sont présents ceux du fer, du cuivre, du cobalt et/ou du manganèse, la mise en oeuvre de composés solubles du fer divalent et/ou trivalent étant préférée.

9. Composition selon les revendications 7 à 8, **caractérisée en ce qu'**on met en oeuvre, à titre d'accélérateurs, des composants de mélange habituels possédant un potentiel de réduction, constitués par des systèmes redox déclenchant des polymérisations radicalaires.

10. Composition selon les revendications 7 à 9, **caractérisée en ce que** les composants du système d'amorçage sont mis en oeuvre dans les concentrations ci-après - rapportées respectivement au mélange total - :
les composés d'hydrazone : à concurrence d'au moins environ 0,1 % en poids, de manière appropriée de 0,5 à 7,5 % en poids, de préférence de 1 à 4 % en poids ;
le métal de composé métallique soluble : à concurrence de 0 jusqu'à quelques pour cent en poids, de manière appropriée à concurrence de 50 ppm jusqu'à 1 % en poids, de préférence de 1000 à 5000 ppm ;
l'agent de réduction : à concurrence de 0 à 5 % en poids, de préférence de 1 à 3 % en poids.

11. Composition selon les revendications 7 à 10, **caractérisée en ce qu'**on met en oeuvre, à titre d'agents de réduction ayant un effet d'accélération, des α-hydroxycétones.

12. Composition selon au moins une des revendications précédentes, **caractérisée en ce qu'**on utilise, à titre de colorant, un indicateur connu en soi dont le virage de couleur, en solution aqueuse, se situe dans un domaine de pH de 3,0 à 6,5.

13. Composition selon la revendication 12, **caractérisée en ce que** le virage de couleur a lieu de l'état incolore jaunâtre à la couleur rouge/bleu, verte ou aux couleurs complémentaires du rouge, du bleu, du vert et du jaune.

14. Composition selon la revendication 12 ou 13, **caractérisée en ce que** le colorant est choisi parmi le groupe comprenant la 5-nitroindazolinone, le bleu de bromophénol, le bleu de bromochlorophénol, le vert de bromo-crésol, l'alizarine S, le rouge de méthyle, le rouge d'éthyle.

15. Procédé pour la préparation de la composition selon les revendications 1 à 14, par homogénéisation du composé ou des composés polymérisables, du système d'activateur, du composant de colorants et le cas échéant d'autres additifs.

16. Utilisation de la composition selon une ou plusieurs des revendications 1 à 14, à titre de système d'étanchéisation et adhésif durcissant dans des conditions aérobies, à titre d'agent d'enduction pour l'enduction superficielle, à titre de matière à mouler ou encore à titre d'additifs à des encres et à des encres d'imprimerie.
